Europäisches Patentamt

European Patent Office

Office européen des brevets

(11) Veröffentlichungsnummer: **0 328 744 B1**

(12) **EUROPÄISCHE PATENTSCHRIFT**

(45) Veröffentlichungstag der Patentschrift:
09.10.91 Patentblatt 91/41

(21) Anmeldenummer: 88118815.5

(22) Anmeldetag: 11.11.88

(51) Int. Cl.⁵: **A47J 31/057**

(54) **Getränkezubereitungsmaschine.**

(30) Priorität: 18.12.87 DE 3743050

(43) Veröffentlichungstag der Anmeldung:
23.08.89 Patentblatt 89/34

(45) Bekanntmachung des Hinweises auf die
Patenterteilung:
09.10.91 Patentblatt 91/41

(84) Benannte Vertragsstaaten:
AT BE CH DE FR GB LI NL SE

(56) Entgegenhaltungen:
EP-A- 0 091 634
DE-A- 3 416 403
DE-U- 8 437 676
DE-U- 8 702 615

(73) Patentinhaber: **Braun Aktiengesellschaft**
**Rüsselsheimer Strasse 22**
**W-6000 Frankfurt/Main (DE)**

(72) Erfinder: **Wunder, Dieter**
**Kirchstrasse 9**
**W-6361 Reichelsheim (DE)**
Erfinder: **Henning, Hans-Jürgen**
**Falkensteiner Strasse 34**
**W-6240 Königstein 2 (DE)**

**Beschreibung**

Die Erfindung bezieht sich auf eine Getränkezubereitungsmaschine, insbesondere zum Zubereiten von Filtergetränken, wie Kaffee oder Tee, mit einem in ein Gehäuse einsetzbaren Filterbehälter, an dessen Boden ein Tropfschutzventil angeordnet ist, das über eine Lagerstelle mit einem Hebel verbunden und das über diesen mittels eines Federelements in Schließstellung bringbar ist, wobei beim Einsetzen des Filterbehälters in die Getränkezubereitungsmaschine ein erster Abschnitt des Hebels von einem gehäuseseitigen Anschlag zur Erlangung einer Bereitschaftsstellung derart um eine erste Drehachse bewegbar ist, daß dabei ohne Öffnung des Tropfschutzventils ein zweiter Abschnitt des Hebels in den Wirkungsbereich eines Auffangbehälters gelangt und daß erst durch Einsetzen des Auffangbehälters unterhalb des Filterbehälters der zweite Abschnitt des Hebels von dem Auffangbehälter um eine zweite Drehachse derart betätigt wird, daß dabei das Tropfschutzventil in seine Offenstellung gelangt.

Aus der DE-A1 34 16 403 ist bereits eine derartige Getränkezubereitungsmaschine bekannt, die mit einem horizontal verschwenkbaren Filterbehälter ausgestattet ist und dessen Tropfschutzventil über ein Federelement in Schließrichtung beaufschlagbar und mittels eines Doppelhebelgestänges in seine Öffnungsstellung bringbar ist. Das Doppelhebelgestänge besteht aus einem Aktivierungshebel und einem Tasthebel, die derart angeordnet sind, daß zunächst der Aktivierungshebel den Tasthebel aus seiner Ruhestellung in seine in den Wirkungsbereich des Auffangbehälters gelangende Bereitschaftsstellung ausgelenkt haben muß, bis erst dann durch weiteres Verschwenken des Tasthebels durch die Oberseite der Kaffeekanne eine Öffnung des Tropfschutzventils möglich ist.

Eine derartige Gestängeanordnung zur Betätigung des Tropfschutzventils arbeitet zwar sehr zuverlässig, ist aber verhältnismäßig aufwendig und daher teuer.

Demgegenüber liegt der Erfindung die Aufgabe zugrunde, eine Verstelleinrichtung für ein Tropfschutzventil zu schaffen, das mit weniger mechanischen Teilen auskommt und das bei einer Kostenersparnis dennoch genauso einwandfrei funktioniert.

Diese Aufgabe wird erfindungsgemäß dadurch gelöst, daß der Hebel aus einem einzigen Stück besteht und daß der Hebel zur Erlangung seiner Bereitschaftsstellung und anschließend zur Erlangung der Offenstellung des Tropfschutzventils nacheinander um zwei Drehachsen gedreht wird. Durch diese erfindungsgemäße Anordnung wird gegenüber dem Stand der Technik ein zusätzlicher Hebel eingespart, so daß bei dennoch gleichem Funktionsablauf die Kosten der Getränkezubereitungsmaschine reduziert werden. Die hierdurch ebenfalls bedingte Montageerleichterung führt zu einer weiteren Kostenersparnis.

In einer ersten Ausführungsform der Erfindung ist vorgesehen, daß die beiden Drehachsen parallel zueinander und senkrecht zur Längsrichtung des Hebels verlaufen. Hierbei wird der Hebel jeweils senkrecht zur im wesentlichen horizontalen Bewegung des Auffangbehälters und des Filterbehälters gedreht, damit eine Betätigung des Hebels durch den Filterbehälter bzw. den Auffangbehälter möglich ist. Dabei wird weiterhin erfindungsgemäß vorgeschlagen, daß in der Bereitschaftsstellung die erste Drehachse gleichzeitig die Lagerstelle des Tropfschutzventils ist, wobei die erste Drehachse gegenüber dem Tropfschutzventil bzw. dem Hebel ein in Drehrichtung des Hebels vorgegebenes Spiel aufweist und wobei zum Öffnen des Tropfschutzventils eine zweite Drehachse am Hebel gebildet wird, die nach Erreichen der Bereitschaftsstellung des Filterbehälters von dem Anlagepunkt, der zwischen dem ersten Abschnitt und dem gehäuseseitigen Anschlag entsteht, gebildet wird. Damit das Tropfschutzventil beim Auslenken des Hebels in seiner Bereitschaftsstellung geschlossen bleibt, bildet die erste Drehachse gleichzeitig die Lagerstelle des Tropfschutzventils. Dadurch, daß der Hebel mit seinem Hebelende während der Bereitschaftsstellung am Gehäuse anliegt, kann der Hebel nun entgegen seiner vorherigen Drehrichtung, die zur Erlangung der Bereitschaftsstellung nötig war, um den Anlagepunkt gedreht werden. Dies ist jedoch nur dann möglich, wenn zur Öffnung des Tropfschutzventils der Hebel mit dem in Betätigungsrichtung des Tropfschutzventils ausgebildeten Spiel versehen ist, damit eine Verschiebung des Hebels gegenüber dem Filterbehälter während der Öffnung des Tropfschutzventils möglich ist.

Zur Verwirklichung des Lagerspiels ist in einer Weiterbildung der Erfindung vorgesehen, daß es von mindestens einer am Hebel ausgebildeten Langlochöffnung und einem in die Langlochöffnung eingreifenden, am Filterbehälter ausgebildeten Gelenkbolzen erzeugt wird. Es ist aber auch möglich, daß das Spiel von mindestens einer am Filterbehälter ausgebildeten Langlochöffnung und einem in die Langlochöffnung eingreifenden, am Hebel oder am Tropfschutzventil ausgebildeten Gelenkbolzen erzeugt wird. Je nach Belieben können beide Ausführungsformen gewählt werden ; sie lassen sich insbesondere dann, wenn die einzelnen Teile aus Kunststoff hergestellt werden, besonders einfach am Filtertrichter anformen.

Um eine Öffnung des Tropfschutzventils durch den oberen Rand des Auffangbehälters bzw. durch den Deckel zu erreichen, erfolgt vorzugsweise die Verlagerung der ersten Achse auf die zweite Achse durch den am Hebel ausgebildeten, mit dem Auffangbehälter in Eingriff gelangenden, zweiten Abschnitt, der zwischen der ersten Drehachse und der zweiten Drehachse am Hebel ausgebildet ist. Besonders einfach läßt sich dieser

2

zweite Abschnitt als Widerlager an der dem Auffangbehälter zugewandten Unterseite am Hebel anformen.

Damit der Hebel stets bei seiner Nichtbetätigung, wie beispielsweise bei herausgeschwenktem oder von der Getränkezubereitungsmaschine 10 abgenommenem Filterbehälter 18, in seine Ausgangslage zurückgeschwenkt wird und gleichzeitig die erste Achse an dem dem Tropfschutzventil näheren Ende der Langlochöffnung anliegt, um beim Öffnen des Tropfschutzventils eine Annäherung des Hebels zum Filterbehälter zu erreichen, stützt sich vorteilhafterweise das Federelement am Filterbehälter und am Hebel ab. Um die Rückstellung des Hebels durch das Federelement auf besonders einfache Weise zu erreichen, wird es von einer Druckfeder gebildet, die, in Längsrichtung von der zweiten zur ersten Drehachse auf den Hebel gesehen, hinter der ersten Drehachse am Hebel angreift.

Damit bei den entsprechenden Bewegungen des Hebels das Tropfschutzventil nur dann öffnet, wenn der Hebel entgegen dem Uhrzeigersinn gedreht wird, ist nach einer Weiterbildung der Erfindung vorgesehen, daß der vom Tropfschutzventil gebildete Ventilsitz innerhalb des Filterbehälters an der Auslauföffnung angeordnet ist und daß ein das Tropfschutzventil verbindendes Ventilgestänge die Auslaßöffnung nach außen zum Hebel durchdringt.

Nach einer zweiten Ausführungsform der Erfindung verläuft die erste Drehachse in Längsrichtung des Hebels, wobei das Tropfschutzventil und die Lagerstelle drehbar gelagert sind und wobei die zweite Achse durch den vom ersten Abschnitt und vom gehäuseseitigen Anschlag gebildeten Anlagepunkt und durch den Mittelpunkt der Lagerstelle verläuft. Auch bei dieser zweiten Ausführungsform muß der einteilige Hebel gemäß der Erfindung um zwei Achsen gedreht werden, bis er erst das Ventil öffnen kann. Dabei liegen das Tropfschutzventil, die Lagerung des Hebels und der erste Hebelabschnitt auf einer gemeinsamen ersten Drehachse, so daß, solange der Hebel in dieser Drehachse gedreht wird, keine Öffnung des Tropfschutzventils erfolgt. Damit aber nun bei einer zweiten Drehung des Hebels, die der ersten Drehung entgegenwirkt, das Tropfschutzventil von seiner Bereitschaftsstellung in seine Offenstellung gelangt, muß erfindungsgemäß eine zweite Drehachse am Hebel gebildet werden. Aufgrund der hier außerhalb des Hebels liegenden, zweiten Drehachse wird der Ventilkörper von der Dichtfläche beim Öffnen seitlich nach unten wegbewegt. Dies könnte sich nachhaltig auf die Lebensdauer des Ventils auswirken. Damit nun der Ventilkörper stets konzentrisch von der Dichtfläche abhebt, wird nach einer Weiterbildung der Erfindung vorgeschlagen, daß die erste Drehachse in Längsrichtung des Hebels verläuft, daß das Tropfschutzventil und die Lagerstelle drehbar gelagert sind und daß die zweite Drehachse von der Lagerstelle gebildet wird, die im wesentlichen senkrecht zum ersten Hebelabschnitt verläuft. Hierdurch erhält der Hebel eine Zwangsführung, die ihn während des Öffnens des Tropfschutzventils so um die Lagerstelle drehen läßt, daß dabei der Ventilkörper konzentrisch vom Ventilsitz nach unten abhebt.

Um eine Drehung des Hebels um sich selbst zu ermöglichen, werden das Tropfschutzventil von einem Kugelventil und die Lagerstelle von einem Kugelgelenk gebildet, wobei, in Längsrichtung des Hebels gesehen, die Lagerstelle und das Tropfschutzventil hintereinander angeordnet sind.

Um außer der Drehung des Hebels um seine eigene Achse auch noch eine Bewegung senkrecht zum Dichtsitz der am unteren Abschnitt des Filterbehälters ausgebildeten Auslaßöffnung zuzulassen, wird in einer Weiterbildung der Erfindung vorgeschlagen, daß der Hebel in Öffnungs- bzw. Schließrichtung des Tropfschutzventils durch eine Führung geführt wird. Würde nämlich diese Führungsanordnung nicht vorhanden sein, so würde ein einwandfreies Öffnen des Tropfschutzventils nur sehr schwer möglich sein, da der Hebel während seiner Verdrehung durch das Auffanggefäß seitlich wegschwenken würde und nicht nur in einer einzigen Ebene sich bewegt.

Die Führung wird vorteilhafterweise aus zwei am Filterbehälter angeordneten, in Öffnungs- bzw. Schließrichtung des Tropfschutzventils verlaufenden, gegenüberliegenden Wänden gebildet, zwischen denen ein Teil des Hebels mit geringem Spiel gleitend gelagert ist. Hierdurch wird eine seitliche Führung des Hebels gewährleistet, so daß zum Zwecke der Bereitschaftsstellung eine Drehung des ersten Hebelsabschnitts um seine Längsachse und zum Zwecke der Offenstellung eine Drehung senkrecht zur Längsachse des ersten Hebelabschnitts um den Lagerpunkt seiner Lagerstelle wie ein zweiarmiger Hebel möglich ist. Die Wände lassen sich an einem aus Kunststoff hergestellten Filterbehälter besonders einfach anformen, wenn diese hervorstehend am Filterbehälter angeordnet sind.

Damit der quer zum ersten Hebelabschnitt verlaufende, zweite Abschnitt des Hebels bei einem nicht ordnungsgemäß in die Getränkezubereitungsmaschine eingesetzten Filterbehälter stets außerhalb des Wirkungsbereiches des Auffangbehälters liegt, wirkt vorzugsweise das Federelement derart auf den Hebel ein, daß dabei durch Drehung des Hebels eine selbsttätige Annäherung des zweiten Abschnitts zum Filterbehälter hin erfolgt. Eine besonders einfache Lösung ergibt sich, wenn das Federelement als Druckfeder ausgebildet ist und wenn deren Kraft in Öffnungsrichtung des Tropfschutzventils auf den ersten Abschnitt des Hebels einwirkt. Es ist aber auch möglich, das Federelement als Zugfeder auszubilden, wobei sie auf den zweiten Abschnitt wiederum so auf den Hebel einwirken muß, daß der zweite Abschnitt des Hebels in Schließstellung des Tropfschutzventils stets außerhalb des Wirkungsbereichs des Auffangbehälters federnd verharrt. Um diese Wirkung zu erzielen,

3

können auch andere Federelemente, wie beispielsweise eine Blattfeder oder andere Formfedern, verwendet werden, die selbstverständlich dann entsprechend ihrer Wirkung auch entsprechend am Hebel angreifen müssen, um eine Linksdrehung (also entgegen dem Uhrzeigersinn des Hebels) zu erreichen.

Zwei Ausführungsbeispiele der Erfindung sind in der Zeichnung dargestellt und werden im folgenden näher erläutert. Es zeigen :

Fig. 1 eine Teilansicht einer Kaffee- oder Teemaschine mit einem teilweise im Bodenbereich geschnittenen Filterbehälter, mit einem in seiner Offenstellung befindlichen, ein erstes Ausführungsbeispiel zeigendes Tropfschutzventil und mit einem teilweise geschnittenen, unterhalb des Tropfschutzventils angeordneten Auffanggefäß,

Fig. 2 die Schließstellung des in Fig. 1 dargestellten Tropfschutzventils,

Fig. 3 die Bereitschaftsstellung des in den Fig. 1 und 2 dargestellten Tropfschutzventils,

Fig. 4 einen Teillängsschnitt gemäß der Schnittführung IV-IV nach Fig. 2,

Fig. 5 die Schließstellung eines schematisch und perspektivisch dargestellten Tropfschutzventils nach einem zweiten Ausführungsbeispiel der Erfindung,

Fig. 6 die Bereitschaftsstellung des Tropfschutzventils nach dem zweiten Ausführungsbeispiel gemäß Fig. 5, und

Fig. 7 die Offenstellung des Tropfschutzventils nach dem zweiten Ausführungsbeispiel gemäß den Fig. 5 und 6.

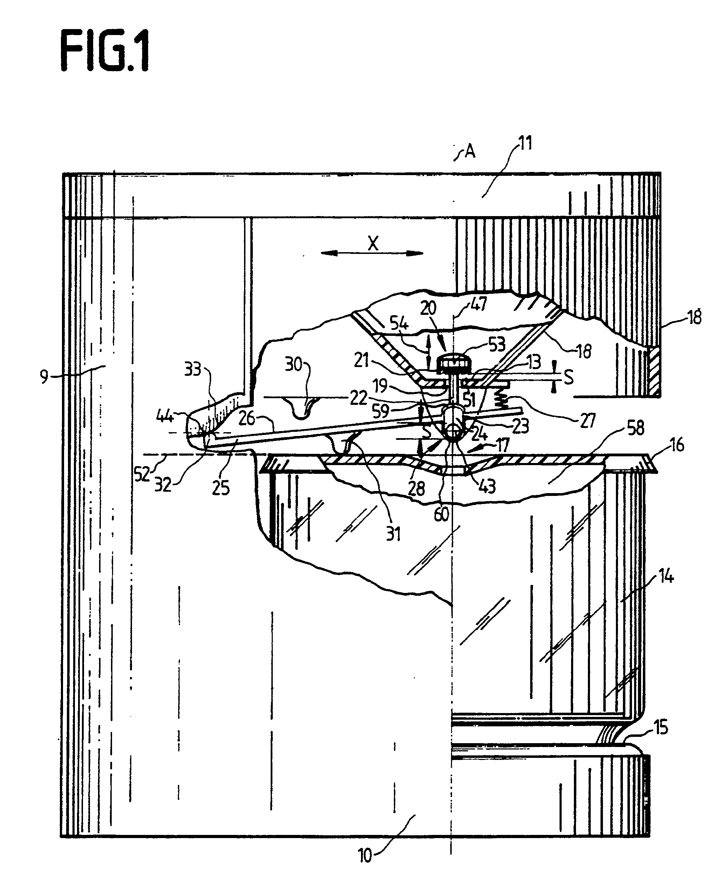

Zur Vermeidung von Wiederholungen wurden in den Figuren 1 bis 7 für entsprechend gleiche Bauteile gleiche Positionsnummern verwendet. Dies erleichtert ebenso den Vergleich baugleicher Teile in den verschiedenen Ausführungsbeispielen.

In Fig. 1 ist eine als Kaffee- bzw. Teemaschine ausgebildete Getränkezubereitungsmaschine 10 dargestellt, die im wesentlichen aus einem an einem Gehäuse 11 in Pfeilrichtung X horizontal verschwenkbar gelagerten Filterbehälter 18 und einem unterhalb des Filterbehälters 18 einsetzbaren Auffangbehälter 14 in Form einer Kaffeekanne bzw. Teekanne besteht. Der im wesentlichen hohlzylindrische Auffangbehälter 14 sitzt auf einer vorzugsweise beheizbaren Platte 15 auf und ist an seiner Behälteröffnung 58 durch einen im wesentlichen kreisscheibenförmigen, abnehmbaren Deckel 16 verschlossen, der mittig eine Einlaßöffnung 17 aufweist. Der Filterbehälter 18 dient zur Aufnahme eines mit Kaffeepulver bzw. Teeblättern füllbaren Filters (nicht im Filterbehälter 18 dargestellt), der mit heißem Wasser zur Extrahierung aufgegossen wird. Das in einem Wasserstand 9 eingegossene Wasser wird in einem unterhalb der Platte 15 befestigten, in der Zeichnung nicht dargestellten Durchlauferhitzer erhitzt und von dort über eine in der Zeichnung nicht dargestellte Wasserleitung in den Filterbehälter 18 gefördert. Der Filterbehälter 18 läßt sich sowohl zum Aufbrühen von Kaffee als auch Tee verwenden. Es ist aber auch möglich, sowohl für Kaffee als auch für Tee einen gesonderten Filterbehälter 18 zu verwenden, um Geschmacksverfälschungen zu vermeiden.

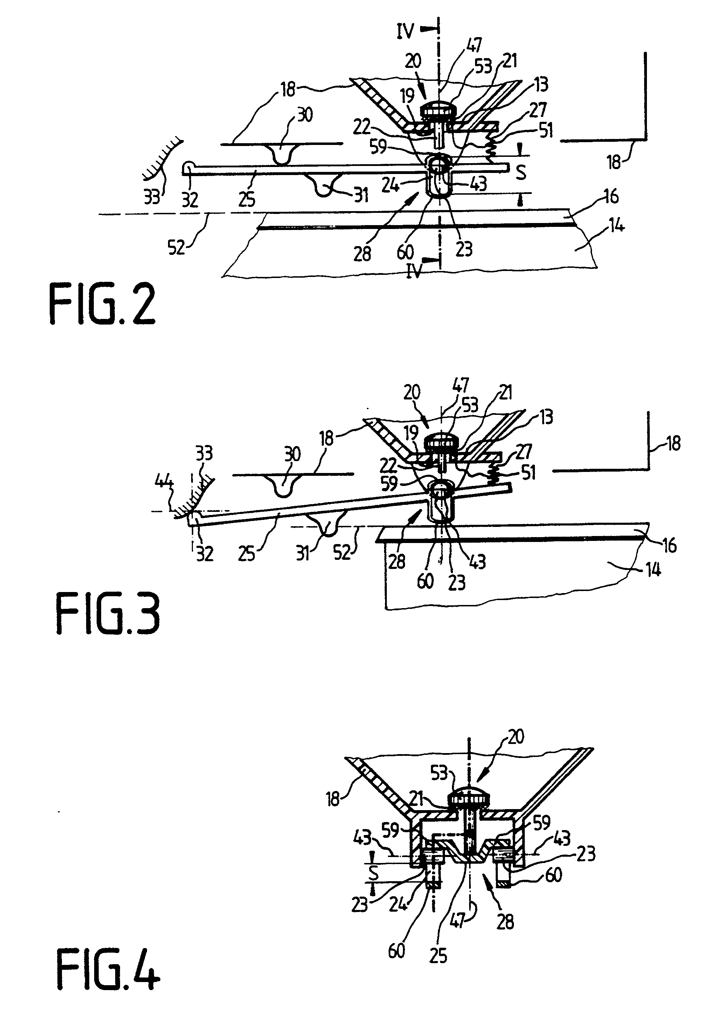

Der Boden 13 des Filterbehälters 18 weist eine Auslaßöffnung 19 auf, die im eingeschwenkten Zustand des Filterbehälters 18 im wesentlichen koaxial zur Einlaßöffnung 17 des Auffangbehälters 14 ausgerichtet ist. Die Auslaßöffnung 19 läßt sich über ein Tropfschutzventil 20 verschließen, das aus einem im Inneren des Filterbehälters 18 ausgebildeten, pilzähnlichen Ventilkörper 53 mit einem Ventilgestänge 22 und einer am Ventilgestänge befestigten, der Auslaßöffnung 19 zugewandten Ventildichtung 21 besteht. Bei geschlossenem Tropfschutzventil 20 drückt der Ventilkörper 53 die Ventildichtung 21 druckdicht gegen den die Auslaßöffnung 19 umgebenden Ventilsitz 51. Das Ventilgestänge 22 durchdringt gemäß den Fig. 1 bis 4 die Auslaßbohrung 19 des Filterbehälters 18 von oben nach unten. Das unterhalb der Auslaßöffnung verlaufende Ende des Ventilgestänges 22 ist fest mit dem Hebel 25 verbunden. Die Ventildichtung 21 muß genügend elastisch ausgebildet sein, damit, wenn der Hebel 25 in seine Bereitschaftsstellung geschwenkt wird (Fig. 3), durch die geringe Schrägstellung des Ventilkörpers 53 dennoch eine einwandfreie Abdichtung des Tropfschutzventils 20 gewährleistet ist. Hierzu muß außerdem ein genügend großes Spiel zwischen der Auslaßöffnung 19 und dem Ventilgestänge 22 vorhanden sein. Es ist aber auch möglich, das Ventilgestänge 22 am Hebel 25 elastisch verformbar bzw. gelenkig anzuordnen, damit das Ventilgestänge 22 überhaupt nicht erst durch die Drehbewegung des Hebels 25 in seine Bereitschaftsstellung in eine Schräglage gegenüber der Auslaßöffnung 19 gelangt.

Gemäß Fig. 4 weist der Filterbehälter 18 unterhalb der Auslaßöffnung 19 zwei 2 gegenüberliegende, im wesentlichen parallel zur Oberfläche des Deckels 16 verlaufende Gelenkbolzen 23 auf, die in je eine im wesentlichen parallel zur Mittelachse 47 des Tropfschutzventils 20 verlaufende Langlochöffnung 24 des Hebels 25 von außen eingreifen. Die obere und untere Wandung 59, 60 der Langlochöffnung 24 begrenzt den Hub S des Ventilkörpers 53 in seiner Öffnungs- bzw. Schließrichtung 54. Die Gelenkbolzen 23 bilden gleichzeitig die Lagerstelle 28 und die erste Drehachse 43 für den Hebel 25. Die Mittelachse 47 der Auslaßöffnung 19 bildet die Symmetrieachse der Lagerstelle 28.

Der Hebel 25 verläuft, wie aus den Fig. 1 bis 3 hervorgeht, über die Lagerstelle 28 in der Zeichnung nach rechts hinaus. An seiner Oberseite 26 liegt ein als Druckfeder ausgebildetes Federelement 27 an, das sich mit seinem in der Zeichnung oberen Ende an der Unterseite des Filterbehälters 18 abstützt. Durch die Kraft der Druckfeder 27 wird der Hebel 25 im Uhrzeigersinn gedreht und schlägt in Schließstellung des Tropfschutzventils 20 (Fig. 2) an einem Widerlager 30 an, das an der Unterseite des Filterbehälters 18 (Fig. 1 bis 3) links von der Lagerstelle 28 und oberhalb des Hebels 25 am Filterbehälter 18 angeformt ist.

Zwischen dem Widerlager 30 und der Lagerstelle 28 ist nach den Fig. 1 bis 3 an der Unterseite des Hebels 25 ein zweiter Abschnitt 31 angeordnet, der als Nocken ausgebildet ist und gegen den beim Einschieben des Auffangbehälters 14 die Oberseite des Deckels 16 bzw. der Rand des Auffangbehälters 14 zur Anlage bringbar ist (Fig. 1), wenn der Filterbehälter 18 bereits seine Bereitschaftsstellung (Fig. 3) eingenommen hat. Am linken freien Ende des Hebels 25 ist ein als Nocken ausgebildeter erster Ab schnitt 32 vorgesehen, der Teil des Gehäuses 11 der Kaffeemaschine 10 ist und der gemäß Fig. 3 in Bereitschaftsstellung des Filterbehälters an dem gehäuseseitigen Anschlag 33 zur Anlage kommt. Der erste Abschnitt 32 bildet mit dem gehäuseseitigen Anschlag 33 die zweite Drehachse 44 des Hebels 25.

Die Wirkungsweise der erfindungsgemäßen Kaffee- oder Teemaschine nach dem ersten Ausführungsbeispiel ist folgende :

In Schließstellung des Tropfschutzventils 20 (Fig. 2) drückt das Federelement 27 den rechts von der Lagerstelle 28 liegenden Abschnitt des Hebels 25 in der Zeichnung nach unten und bringt daher das Tropfschutzventil 20 bzw. den Ventilkörper 53 zur dichten Anlage am Ventilsitz 51 der Auslaßöffnung 19. Dabei stützt sich die in der Zeichnung obere Wandung 59 der Langlochöffnungen 24 an der Oberseite der Gelenkbolzen 23 und somit am Filterbehälter 18 ab, so daß der Hebel 25 ortsfest am Filterbehälter 18 hängt. Durch dieses im Uhrzeigerdrehsinn auf den Hebel 25 einwirkende Drehmoment schlägt der Hebel 25 gleichzeitig an dem Widerlager 30 an, um eine definierte Ausgangslage des Hebels 25 gegenüber dem gehäuseseitigen Anschlag 33 zu gewährleisten.

Beim Einschwenkvorgang des Filterbehälters 18 in seine Bereitschaftsstellung (Fig. 3) fährt der erste Abschnitt 32 des Hebels 25 gegen den gehäuseseitigen Anschlag 33, so daß bei weiterer Verschwenkung des Filterbehälters 18 der erste Abschnitt 32 durch den Anschlag 33 in der Zeichnung nach unten gedrückt wird, wodurch der Hebel 25 um den Gelenkbolzen 23 entgegen dem Uhrzeigersinn gedreht wird. Eine Öffnung des Tropfschutzventils 20 erfolgt jedoch nicht, da durch die Drehung des Hebels 25 entgegen dem Uhrzeigersinn der zweite Abschnitt 31 in den Wirkungsbereich 52 des Auffangbehälters 14 bzw. in den Wirkungsbereich des den Auf fangbehälter 14 verschließenden Deckels 16 gelangt. Obwohl während dieser Drehung der Hebel 25 um den Gelenkbolzen 23 um wenige Grade gedreht wird, d.h., der Ventilkörper 53 folgt aufgrund seiner festen Anbindung an den Hebel 25 dem Hebel 25, bleibt das Tropfschutzventil 20 demnach weiterhin geschlossen, da die besonders elastische Ventildichtung 21 diese geringen Ventilspaltänderungen ausgleicht. Eine Verschiebung des Ventilkörpers 53 in der Zeichnung nach oben erfolgt ebenso nicht, da dieser auf der ersten Drehachse 43 des Hebels 25 liegt. In der Bereitschaftsstellung stützt sich weiterhin die obere Wandung 59 der Langlochöffnungen 24 an den Gelenkbolzen 23 ab.

Wird nun gemäß Fig. 3 der Auffangbehälter 14 mit seinem Deckel 16 in den zwischen der beheizbaren Platte 15 und dem Filterbehälter 18 in der Höhe begrenzten Raum eingesetzt, so stößt der nach oben konische Rand des Deckels 16 an dem zweiten Abschnitt 31 des Hebels 25 an und drückt beim weiteren Einschieben des Auffangbehälters 14 unter den Filterbehälter 18 den Hebel 25 um die nun neu für den Hebel gebildete, zweite Drehachse 44 nach oben und dreht dabei den Hebel 25 entgegen dem Uhrzeigersinn. Da die Gelenkbolzen 23 fest mit dem Filterbehälter 18 verbunden sind — der Filterbehälter 18 ist selbstverständlich in der Bereitschaftsstellung nicht mehr in Längsrichtung der Auslaßöffnung 19 höhenverschiebbar — wandert die Langlochöffnung 24 mit dem Hebel 25, dem Ventilkörper 53 und der Ventildichtung 21 solange in der Zeichnung gemäß Fig. 3 und 4 nach oben, bis die untere Wandung 60 der Langlochöffnung 24 am Gelenkbolzen 23 anschlägt. Der Hebel 25 hat jetzt seine Endstellung erreicht und kann nicht mehr weiter entgegen dem Uhrzeigersinn gedreht werden. Dabei hat das Tropfschutzventil seine maximale Offenstellung erreicht.

Die Anordnung zeigt, daß man auch mit nur einem einzigen Hebel 25 nach der Erfindung das Tropfschutzventil 20 öffnen kann, wenn der Filterbehälter 18 und der Auffangbehälter 14 mit seinem Deckel 16 ordnungsgemäß in der Kaffeemaschine 10 plaziert sind.

Wird zum Entnehmen des fertig gebrühten Getränks der Auffangbehälter 14 mit dem Deckel 16 von der beheizbaren Platte 15 heruntergenommen, so erfolgen die Bewegungsabläufe des Hebels und des Tropfschutzventils in umgekehrter Reihenfolge, wie oben beschrieben, bis das Tropfschutzventil 20 geschlossen ist und somit kein Tropfen auf die Platte 15 gelangen kann.

Wird beispielsweise der Filterbehälter 18 bei noch auf der beheizbaren Platte 15 ordnungsgemäß abgestelltem Auffangbehälter 14 zuerst herausgeschwenkt, so wandert der erste Abschnitt 32 gemäß Fig. 3 entlang dem gehäuseseitigen Anschlag nach oben, wobei zunächst der Hebel 25 um den zweiten Abschnitt 31 im Uhr-

5

zeigersinn dreht. Dabei wandert der Hebel 25 mit der Langlochöffnung 24 solange nach unten, bis das Tropfschutzventil 20 geschlossen ist. Bei weiterem Ausschwenken des Filterbehälters 18 wandert der erste Abschnitt 32 weiter nach oben, bis der Hebel 25 am Widerlager 30 anschlägt. Kurz zuvor hat bereits der zweite Abschnitt 31 vom Deckel 16 abgehoben. Bei diesem zweiten Bewegungsablauf dreht der Hebel 25 wiederum um die erste Drehachse 43 im Uhrzeigersinn.

Der einstückige Hebel 25 hat in Verbindung mit dem Tropfschutzventil 20 den Vorteil, daß die Abmessungen dieser Teile in bezug auf den gehäuseseitigen Anschlag 33 und den zweiten Abschnitt 31 so bemessen werden können, daß erst kurz vor bzw. aus der Endlage des Filterbehälters 18 und des Hebels 25 das Tropfschutzventil 20 schlagartig öffnet bzw. schließt. Weiterhin können mit dieser erfindungsgemäßen Anordnung große Toleranzabweichungen, die bei der Herstellung und Montage von Kunststoffteilen leicht möglich sind, besonders einfach ausgeglichen werden, da der Hebel 25 einen Übersetzungsmechanismus darstellt.

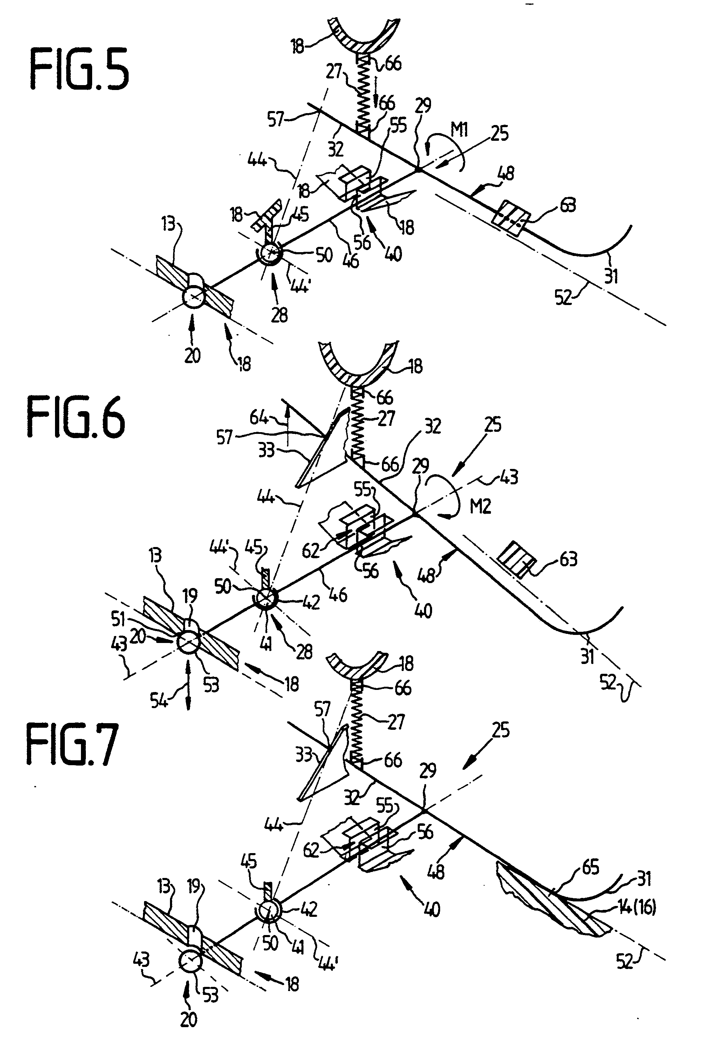

In den Fig. 5 bis 7 ist ein zweites Ausführungsbeispiel der Erfindung schematisch dargestellt. Während der Hebel 25 ganz schematisch dargestellt ist, so sind vom Filterbehälter 18 nur Bruchstücke und von dem Gehäuse nur in Fig. 6 der gehäuseseitige Anschlag 33 und von der Kaffeekanne nur deren oberer Wirkungsbereich 52 dargestellt. Bei diesem Ausführungsbeispiel besteht der Hebel 25 aus einem ersten Hebelabschnitt 46, an dem sich in der Zeichnung von links nach rechts an das Tropfschutzventil 20 eine Lagerstelle 28, eine Führung 40 und ein quer zum ersten Hebelabschnitt 46 verlaufender, zweiter Hebelabschnitt 48 anschließen.

Das Tropfschutzventil 20 besteht gemäß den Fig. 5 bis 7 aus einem am linken Ende des ersten Hebelabschnitts 46 befestigten, als Kugel ausgebildeten Ventilkörper 53, der sowohl in Schließstellung (Fig. 5) als auch in Bereitschaftsstellung (Fig. 6) an einem die Auslaßöffnung 19 des Filterbehälters 18 nach unten begrenzenden, an die kugelige Oberfläche des Ventilkörpers 53 angepaßten Ventilsitz 51 dichtend anliegt. In einem vorgegebenen Abstand schließt sich an das Tropfschutzventil 20 nach rechts an dem ersten Hebelabschnitt 46 die Lagerstelle 28 an, die aus einer am ersten Hebelabschnitt 46 angeformten, kugligen Ausnehmung 42 besteht, in die zur Bildung eines Kugelgelenks eine an die Ausnehmung 42 angepaßte Kugel 41 von oben her eingeknöpft ist. Die Kugel 41 ist über einen Verbindungszapfen 45 mit dem Filterbehälter 18 einteilig verbunden. Der Hebel 25 ist somit durch diese Lagerung an der Kugel 41 in allen Richtungen drehbar gelagert.

An die Lagerstelle 28 schließt sich am ersten Hebelabschnitt 46 gemäß den Fig. 5 bis 7 nach rechts weiterhin eine Führung 40 an, die aus zwei am Filterbehälter 18 befestigten, parallel zur Öffnungs- bzw. Schließrichtung 54 des Tropfschutzventils 20 verlaufenden Wänden 55, 56 besteht. Durch den von den beiden gegenüberliegenden Wänden 55, 56 gebildeten, gleich breiten Spalt 62 wird der erste Hebelabschnitt 46 in der Ebene der Öffnungs- bzw. Schließrichtung 54 gleitend geführt.

An dem in den Fig. 5 bis 7 über die Führung 40 nach rechts hinausragenden Ende des ersten Hebelabschnitts 46 ist ein quer zum ersten Hebelabschnitt 46 verlaufender zweiter Hebelabschnitt 48 ausgebildet. Der durch den ersten und zweiten Hebelabschnitt 46, 48 gebildete Hebel 25 stellt somit im wesentlichen ein T dar.

Der in den Fig. 5 bis 7 links vom Knotenpunkt 29 liegende Teil des zweiten Hebelabschnitts 48 bildet entsprechend den Fig. 1 bis 3 den ersten Abschnitt 32 des Hebels 25, während der rechte Teil des zweiten Hebelabschnitts 48 den zweiten Abschnitt 31 des Hebels 25 bildet.

Ein als Druckfeder ausgebildetes Federelement 27 stützt sich am Gehäuse des Filterbehälters 18 ab und drückt von oben auf den ersten Abschnitt 32 des Hebels 25. Hierdurch erfährt der Hebel 25 ein nach Fig. 5 links drehendes Moment M 1, das den Hebel 25 solange nach links drehen läßt, bis er mit seinem zweiten Abschnitt 31 an einem am Filterbehälter 18 ausgebildeten Anschlag 63 anschlägt und somit seine Ausgangs- bzw. Schließstellung gemäß Fig. 5 selbsttätig innehält. Die Druckfeder 27 wird in einer am Filterbehälter 18 und am ersten Abschnitt 32 ausgebildeten Führung 66 geführt und ist durch die vorgegebene Entfernung beider Führungen 66 zueinander in einem bestimmten Maße vorgespannt. In der in Fig. 5 dargestellten Schließstellung des Tropfschutzventils 20 ist entweder der Filterbehälter 18 aus der Getränkezubereitungsmaschine 10 herausgeschwenkt bzw. von ihr demontiert oder er befindet sich noch nicht in seiner vollständigen, in die Getränkezubereitungsmaschine 10 eingeschwenkten Endlage.

Die Endlage des Filterbehälters 18 in der Kaffeemaschine ist erst in Fig. 6 dargestellt, wo ein in der Zeichnung am Gehäuse 11 (nicht dargestellt) ausgebildeter, in Bewegungsrichtung des Filterbehälters 18 von vorne nach schräg hinten verlaufender und als Auflauframpe dienender, gehäuseseitiger Anschlag 33 ausgebildet ist, an dem der erste Abschnitt 32 beim Einschwenken des Filterbehälters 18 in der Zeichnung gemäß der Pfeilrichtung 64 nach oben gleitet, so daß der Hebel 25 ein im Uhrzeigersinn rechts drehendes Moment M 2 erfährt. Hierdurch schwenkt der zweite Abschnitt 31 in der Zeichnung nach unten und gelangt somit in den Wirkungsbereich des Auffangbehälters 14 und seinem Deckel 16. Bei der Rechtsdrehung des Hebels 25 wird die Druckfeder 27 weiter vorgespannt.

Wird nun der Auffangbehälter 14 mit seinem Deckel 16 unter den Filterbehälter 18 geschoben, so schlägt der obere Rand des Auffangbehälters 14 bzw. sein Deckel 16 an dem gekrümmt verlaufenden, die Funktion einer Rampe übernehmenden, zweiten Abschnitt 31 an. Bei weiterer Verschiebung des Auffangbehälters 14 mit seinem Deckel 16 gegen den zweiten Abschnitt 31 wird dieser infolge der Rampe 31 in der Zeichnung nach oben angehoben, wodurch der Hebel 25 nun eine entgegen dem Uhrzeigersinn verlaufende Drehung erfährt, die aber nun nicht, wie bereits in Fig. 5 beschrieben, um die in Längsrichtung des ersten Hebelabschnitts 46 verlaufende erste Drehachse 43, sondern um eine zweite Drehachse 44 verläuft. Diese zweite Drehachse 44, die der zweiten Drehachse 44 in den Fig. 1 bis 3 entspricht, ergibt sich zwangsweise daraus, daß der Hebel 25 zum einen mit seinem ersten Abschnitt 32 am gehäuseseitigen Anschlag 33 ortsfest anliegt und so einen gemeinsamen Anlagepunkt 57 bilden und zum anderen der Hebel 25 weiterhin über den Mittelpunkt 50 seiner Lagerstelle 28 mit dem Filterbehälter 18 verbunden ist. Der Hebel 25 ist also nun über drei Punkte, nämlich die Lagerstelle 28, den Anlagepunkt 57 und den vom Auffangbehälter 14 bzw. seinem Deckel 16 und dem zweiten Abschnitt 31 gebildeten Berührungspunkt 65, gelagert.

Damit aber während der Drehung des Hebels 25 um seine zweite Drehachse 44 der Ventilkörper 53 des Tropfschutzventils 20 überhaupt konzentrisch zur Auslaßöffnung 19 gemäß Fig. 7 nach unten abhebt, dient die Führung 40. Denn wäre die Führung 40 nicht vorhanden, so würde sich der Hebel 25 um die zweite Drehachse 44 seitlich abdrehen. Aufgrund der Führung 40 verlagert sich aber die zweite Drehachse 44 nach 44', und es dreht sich nun der Hebel 25 um den Mittelpunkt 50 der Lagerstelle 28 in der Ebene des Spaltes 62, also in Öffnungsrichtung 54 des Tropfschutzventils 20. Der durch die sich gegenüberliegenden Wände 55, 56 gebildete Spalt 62 läßt also den ersten Hebelabschnitt 46 nur in der Drehebene drehen, in der die Ebene der Auslaßöffnung 19 liegt. Hierdurch wird also gewährleistet, daß der Ventilkörper 53 in Längsrichtung und mittig zur Auslaßöffnung 19 nach unten abhebt. Während des Öffnens des Tropfschutzventils 20 infolge der Anhebung des zweiten Abschnitts 31 durch den Auffangbehälter 14 wird also der erste Hebelabschnitt 46 nach Fig. 7 zum einen in Längsrichtung des Spaltes 62 — denn dort kann der Hebel 25 in keine andere Ebene als die des Spaltes 62 ausweichen — und zum anderen in seiner Längsrichtung um die Lagerstelle 28 in sich selbst gedreht, wobei aber zum Öffnen des Ventils nur der im Spalt 62 von dem ersten Hebelabschnitt 46 zurückgelegte Weg dient. Bei entsprechender Dimensionierung der einzelnen Hebellängen am Hebel 25 und des Rampenverlaufs von Anschlag 33 und Abschnitt 31 kann bereits bei geringsten Verdrehungen bzw. Verschiebungen des Filterbehälters 18 bzw. der Kaffeekanne 14 aus ihrem Endlagenbereich heraus oder dorthin das Tropfschutzventil 20 geöffnet werden.

## Patentansprüche

1. Getränkezubereitungsmaschine (10), insbesondere zum Zubereiten von Filtergetränken, wie Kaffee oder Tee, mit einem in ein Gehäuse (11) einsetzbaren Filterbehälter (18), an dessen Boden (13) ein Tropfschutzventil (20) angeordnet ist, das über eine Lagerstelle (28) mit einem Hebel (25) verhunden und das über diesen mittels eines Federelements (27) in Schließstellung bringbar ist, wobei beim Einsetzen des Filterbehälters (18) in die Getränkezubereitungsmaschine (10) ein erster Abschnitt (32) des Hebels (25) von einem gehäuseseitigen Anschlag (33) zur Erlangung einer Bereitschaftsstellung (Fig. 3 ; Fig 6) derart um eine erste Drehachse (43) bewegbar ist, daß dabei ohne Öffnung des Tropfschutzventils (20) ein zweiter Abschnitt (31) des Hebels (25) in den Wirkungsbereich (52) eines Auffangbehälters (14, 16) gelangt und daß erst durch Einsetzen des Auffangbehälters (14, 16) unterhalb des Filterbehälters (18) der zweite Abschnitt (31) des Hebels (25) von dem Auffangbehälter (14, 16) um eine zweite Drehachse (44, 44') derart betätigt wird, daß dabei das Tropfschutzventil (20) in seine Offenstellung (Fig. 1 ; Fig. 7) gelangt, **dadurch gekennzeichnet,** daß der Hebel (25) aus einem einzigen Stück besteht und daß der Hebel (25) zur Erlangung seiner Bereitschaftsstellung und anschließend zur Erlangung der Offenstellung des Tropfschutzventils (20) nacheinander um zwei Drehachsen (43, 44, 44') gedreht wird.

2. Getränkezubereitungsmaschine nach Anspruch 1, **dadurch gekennzeichnet,** daß die beiden Drehachsen (43, 44) parallel zueinander und senkrecht zur Längsrichtung des Hebels (25) verlaufen.

3. Getränkezubereitungsmaschine nach den Ansprüchen 1 und 2, **dadurch gekennzeichnet,** daß in der Bereitschaftsstellung die erste Drehachse (43) gleichzeitig die Lagerstelle (28) des Tropfschutzventils (20) ist, daß die erste Drehachse (43) gegenüber dem Hebel (25) ein in Drehrichtung des Hebels (25) vorgegebenes Spiel (S) aufweist und daß zum Öffnen des Tropfschutzventils (20) eine zweite Drehachse (44) am Hebel (25) gebildet wird, die nach Erreichen der Bereitschaftsstellung des Filterbehälters (18) von dem Anlagepunkt, der zwischen dem ersten Abschnitt (32) und dem gehäuseseitigen Anschlag (33) entsteht, gebildet wird.

4. Getränkezubereitungsmaschine nach Anspruch 3, **dadurch gekennzeichnet,** daß das an der Lagerstelle (28) vorhandene Spiel (S) von mindestens einer am Hebel (25) ausgebildeten Langlochöffnung (24) und einem in die Langlochöffnung (24) eingreifenden, am Filterbehälter (18) ausgebildeten Gelenkbolzen (23) erzeugt wird.

5. Getränkezubereitungsmaschine nach Anspruch 3, **dadurch gekennzeichnet,** daß das an der Lagerstelle (28) vorhandene Spiel (S) von mindestens einer am Filterbehälter (18) ausgebildeten Langlochöffnung (24) und einem in die Langlochöffnung (24) eingreifenden, am Hebel (25) oder am Tropfschutzventil (20) ausgebildeten Gelenkbolzen (23) erzeugt wird.

6. Getränkezubereitungsmaschine nach Anspruch 3, **dadurch gekennzeichnet**, daß die Verlagerung der ersten Drehachse (43) auf die zweite Drehachse (44) durch den am Hebel (25) ausgebildeten, mit dem Auffangbehälter (14, 16) in Eingriff gelangenden, zweiten Abschnitt (31) erfolgt, der zwischen der ersten Drehachse (43) und der zweiten Drehachse (44) am Hebel (25) ausgebildet ist.

7. Getränkezubereitungsmaschine nach Anspruch 6, **dadurch gekennzeichnet**, daß der zweite Abschnitt (31) als Widerlager ausgebildet ist, das an der dem Auffangbehälter (14, 16) zugewandten Unterseite des Hebels (25) angeordnet ist.

8. Getränkezubereitungsmaschine nach einem der Ansprüche 1 bis 7, **dadurch gekennzeichnet**, daß sich das Federelement (27) am Filterbehälter (18) und am Hebel (25) abstützt.

9. Getränkezubereitungsmaschine nach Anspruch 8, **dadurch gekennzeichnet**, daß das Federelement (27) von einer Druckfeder gebildet wird, die, in Längsrichtung von der zweiten zur ersten Drehachse (44, 43) auf den Hebel (25) gesehen, hinter der ersten Drehachse (43) am Hebel (25) angreift.

10. Getränkezubereitungsmaschine nach einem der vorhergehenden Ansprüche 1 bis 3, **dadurch gekennzeichnet**, daß der vom Tropfschutzventil (20) und der Auslaßöffnung (19) gebildete Ventilsitz (51) innerhalb des Filterbehälters (18) angeordnet ist und daß ein das Tropfschutzventil (20) verbindendes Ventilgestänge (22) die Auslaßöffnung (19) nach außen zum Hebel (25) durchdringt.

11. Getränkezubereitungsmaschine nach Anspruch 1, **dadurch gekennzeichnet**, daß die erste Drehachse (43) in Längsrichtung des Hebels (25) verläuft, daß das Tropfschutzventil (20) und die Lagerstelle (28) drehbar gelagert sind und daß die zweite Drehachse (44) durch den vom ersten Abschnitt (32) und vom gehäuseseitigen Anschlag (33) gebildeten Anlagepunkt (57) und durch den Mittelpunkt (50) der Lagerstelle (28) verläuft.

12. Getränkezubereitungsmaschine nach Anspruch 1, **dadurch gekennzeichnet**, daß die erste Drehachse (43) in Längsrichtung des Hebels (25) verläuft, daß das Tropfschutzventil (20) und die Lagerstelle (28) drehbar gelagert sind und daß die zweite Drehachse (44') von der Lagerstelle (28) gebildet wird, die im wesentlichen senkrecht zum ersten Hebelabschnitt (46) verläuft.

13. Getränkezubereitungsmaschine nach den Ansprüchen 11 oder 12, **dadurch gekennzeichnet**, daß das Tropfschutzventil (20) von einem Kugelventil und die Lagerstelle (28) von einem Kugelgelenk gebildet werden und daß, in Längsrichtung des Hebels (25) gesehen, die Lagerstelle (28) und das Tropfschutzventil (20) hintereinander angeordnet sind.

14. Getränkezubereitungsmaschine nach Anspruch 12, **dadurch gekennzeichnet**, daß der Hebel (25) in Öffnungs- bzw. Schließrichtung (54) des Tropfschutzventils (20) durch eine Führung (40) geführt wird.

15. Getränkezubereitungsmaschine nach Anspruch 14, **dadurch gekennzeichnet**, daß die Führung (40) aus zwei am Filterbehälter (18) angeordneten, in Öffnungs- bzw. Schließrichtung (54) des Tropfschutzventils (20) verlaufenden, gegenüberliegenden Wänden (55, 56) gebildet wird, zwischen denen ein Teil des Hebels (25) mit geringem Spiel gleitend gelagert ist.

16. Getränkezubereitungsmaschine nach Anspruch 15, **dadurch gekennzeichnet**, daß die Wände (55, 56) am Filterbehälter (18) hervorstehend angeformt sind.

17. Getränkezubereitungsmaschine nach einem der Ansprüche 1 oder 11 bis 16, **dadurch gekennzeichnet**, daß das Federelement (27) derart auf den Hebel (25) einwirkt, daß dabei durch Drehung des Hebels eine selbsttätige Annäherung des zweiten Abschnitts (31) zum Filterbehälter (18) erfolgt.

18. Getränkezubereitungsmaschine nach Anspruch 17, **dadurch gekennzeichnet**, daß das Federelement (27) als Druckfeder ausgebildet ist und daß deren Kraft in Öffnungsrichtung (54) des Tropfschutzventils (20) auf den ersten Abschnitt (32) des Hebels (25) einwirkt.

19. Getränkezubereitungsmaschine nach Anspruch 17, **dadurch gekennzeichnet**, daß das Federelement (27) als Zugfeder ausgebildet ist und von dem Filterbehälter (18) auf den zweiten Abschnitt (31) einwirkt.

## Claims

1. A beverage-making machine (10), in particular for making filtered beverages such as coffee or tea, having a filter case (18) mountable into a housing (11), on the bottom (13) of which filter case an anti-drip valve (20) is arranged which, via a point of support (28), is coupled to a lever (25) and which, via the latter, is movable into the closed position by means of a spring element (27), while upon insertion of the filter case (18) into the beverage-making machine (10), for obtaining a ready position (Figure 3 ; Figure 6) a first portion (32) of the lever (25) is movable by a stop (33) on the housing in such a manner about a first axis of rotation (43) that, in doing so, without opening the anti-drip valve (20), a second portion (31) of said lever (25) reaches the range of effect (52) of a storing receptacle (14, 16) and that, only by insertion of the storing receptacle (14, 16) beneath the filter case (18), the second portion (31) of the lever (25) is actuated by the storing receptacle (14, 16) to move about a second axis of rotation (44, 44') such that thereby the anti-drip valve (20) will assume its opened position (Figure 1 ; Figure 7), **characterized** in that the lever (25) is made of one single piece, and in that the lever (25) is turned successively about two axes of rotation (43, 44, 44') for adopting its ready position and, subsequently, for attaining the opened position of the anti-drip valve (20).

2. A beverage-making machine as claimed in claim 1, **characterized** in that the two axes of rotation (43, 44) extend in parallel to each other and vertically in relation to the longitudinal direction of the lever (25).

3. A beverage-making machine as claimed in claims 1 and 2, **characterized** in that, in the ready position, the first axis of rotation (43) is at the same time the point of support (28) of the anti-drip valve (20), in that the first axis of rotation (43) has a play (S) in relation to the lever (25) which is predetermined in the direction of rotation of the lever (25), and in that, for opening the anti-drip valve (20), a second axis of rotation (44) is formed on the lever (25) which, after the ready position of filter case (18) is reached, is constituted by the point of abutment resulting between the first portion (32) and the stop (33) on the housing.

4. A beverage-making machine as claimed in claim 3, **characterized** in that the play (S) existing on the point of support (28) is produced by at least one oblong aperture (24) designed on the lever (25) and by a joint pin (23) that is designed on the filter case (18) and engages into the oblong aperture (24).

5. A beverage-making machine as claimed in claim 3, **characterized** in that the play (S) existing on the point of support (28) is produced by at least one oblong aperture (24) designed on the filter case (18) and by a joint pin (23) that is designed on the lever (25) or on the anti-drip valve (20) and that engages into the oblong aperture (24).

6. A beverage-making machine as claimed in claim 3, **characterized** in that the shift of the first axis of rotation (43) onto the second axis of rotation (44) is performed by the second portion (31) which is designed on the lever (25) and which is moving into engagement with the storing receptacle (14, 16), the said portion being designed between the first axis of rotation (43) and the second axis of rotation (44) on the lever (25).

7. A beverage-making machine as claimed in claim 6, **characterized** in that the second portion (31) is designed as an abutment which is arranged on the bottom side of the lever (25) facing the storing receptacle (14, 16).

8. A beverage-making machine as claimed in any one of the claims 1 to 7, **characterized** in that the spring element (27) takes support on the filter case (18) and on the lever (25).

9. A beverage-making machine as claimed in claim 8, **characterized** in that the spring element (27) is formed by a compression spring which makes catch at the lever (25) behind the first axis of rotation (43), when viewed in the longitudinal direction from the second to the first axis of rotation (44, 43) on the lever (25).

10. A beverage-making machine as claimed in any one of the preceding claims 1 to 3, **characterized** in that the valve seat (51) formed by the anti-drip valve (20) and the outlet opening (19) is placed inside the filter case (18), and in that a valve mechanism (22) connecting the anti-drip valve (20) penetrates the outlet opening (19) outwardly to the lever (25).

11. A beverage-making machine as claimed in claim 1, **characterized** in that the first axis of rotation (43) extends in the longitudinal direction of the lever (25), in that the anti-drip valve (20) and the point of support (28) are pivoted, and in that the second axis of rotation (44) extends through the point of abutment (57) formed by the first portion (32) and by the stop (33) on the housing as well as through the centre (50) of the point of support (28).

12. A beverage-making machine as claimed in claim 1, **characterized** in that the first axis of rotation (43) extends in the longitudinal direction of the lever (25), in that the anti-drip valve (20) and the point of support (28) are pivoted, and in that the second axis of rotation (44') is constituted by the point of support (28) and extends substantially vertically relative to the first lever portion (46).

13. A beverage-making machine as claimed in claim 11 or 12, **characterized** in that the anti-drip valve (20) is formed by a ball valve and the point of support (28) is formed by a ball-and-socket joint, and in that, when viewed in the longitudinal direction of the lever (25), the point of support (28) and the anti-drip valve (20) are arranged one behind the other.

14. A beverage-making machine as claimed in claim 12, **characterized** in that the lever (25) is guided by a guidance (40) in the opening and/or closing direction (54) of the anti-drip valve (20).

15. A beverage-making machine as claimed in claim 14, **characterized** in that the guidance (40) is constituted by two opposed walls (55, 56) which are arranged on the filter case (18), which extend in the opening and/or closing direction (54) of the anti-drip valve (20) and in-between which a part of the lever (25) is slidably supported with little play.

16. A beverage-making machine as claimed in claim 15, **characterized** in that the walls (55, 56) are shaped at the filter case (18) in a projecting manner.

17. A beverage-making machine as claimed in any one of the claims 1 or 11 to 16, **characterized** in that the spring element (27) acts upon the lever (25) in such a manner that, in doing so, rotation of the lever will cause the second portion (31) to automatically approach the filter case (18).

18. A beverage-making machine as claimed in claim 17, **characterized** in that the spring element (27) is designed as a compression spring, and in that the latter's force acts upon the first portion (32) of the lever (25) in the opening direction (54) of the anti-drip valve (20).

19. A beverage-making machine as claimed in claim 17, **characterized** in that the spring element (27) is designed as a tension spring and acts from the filter case (18) upon the second portion (31).

## Revendications

1. Machine pour la préparation de boissons (10), en particulier pour la préparation de boissons filtrées, comme le café ou le thé, avec un porte-filtre (18) qui s'installe dans un boîtier (11) et dont le fond (13) porte une vanne pare-gouttes (20) qui, par l'intermédiaire d'un point d'articulation (28), est reliée à un levier (25) et qui peut être placée en position de fermeture grâce à celui-ci sous l'effet d'un élément élastique (27), l'insertion du porte-filtre (18) dans la machine pour la préparation de boissons (10) écartant une première section (32) du levier (25) d'une butée solidaire du boîtier (33) afin d'atteindre une position de disponibilité (figure 3, figure 6) en la faisant basculer autour d'un premier axe de pivotement (43) de telle manière que, sans ouvrir la vanne pare-gouttes (20), une seconde section (31) du levier (25) arrive dans la zone d'action (52) d'un réservoir collecteur (14, 16), seule l'introduction du réservoir collecteur (14, 16) au-dessous du porte-filtre (18) ayant pour effet que le réservoir collecteur (14, 16) actionne la seconde section (31) du levier (25) autour d'un second axe de pivotement (44, 44') pour placer la vanne pare-gouttes (20) dans sa position d'ouverture (figure 1, figure 7), caractérisée en ce que le levier (25) est d'une seule pièce et en ce que le levier (25), pour prendre sa position de disponibilité puis pour que la vanne pare-gouttes (20) prenne sa position d'ouverture, tourne autour de deux axes de pivotement (43, 44, 44').

2. Machine pour la préparation de boissons selon la revendication 1, caractérisée en ce que les deux axes de pivotement (43, 44) sont parallèles l'un à l'autre et perpendiculaires à la direction longitudinale du levier (25).

3. Machine pour la préparation de boissons selon les revendications 1 et 2, caractérisée en ce que, dans la position de disponibilité, le premier axe de pivotement (43) est en même temps le point d'articulation (28) de la vanne pare-gouttes (20), en ce que le premier axe de pivotement (43) présente par rapport au levier (25) un jeu prédéterminé (S) dans la direction de rotation du levier (25) et en ce que, pour ouvrir la vanne pare-gouttes (20), il existe sur le levier (25) un second axe de pivotement (44) qui est forme, après arrivée à la position de disponibilité du porte-filtre (18), par le point de contact entre la première section (32) et la butée solidaire du boîtier (33).

4. Machine pour la préparation de boissons selon la revendication 3, caractérisée en ce que le jeu (S) existant au niveau du point d'articulation (28) est produit par au moins une ouverture oblongue (24) formée sur le levier (25) et par un goujon d'articulation (23) formé sur le porte-filtre (18) et s'engageant dans l'ouverture oblongue (24).

5. Machine pour la préparation de boissons selon la revendication 3, caractérisée en ce que le jeu (S) existant au niveau du point d'articulation (28) est produit par au moins une ouverture oblongue (24) formée sur le porte-filtre (18) et par un goujon d'articulation (23) formé sur le levier (25) ou sur la vanne pare-gouttes (20) et s'engageant dans l'ouverture oblongue (24).

6. Machine pour la préparation de boissons selon la revendication 3, caractérisée en ce que le déplacement du premier axe de pivotement (43) vers le second axe de pivotement (44) est commandé par la seconde section (31) formée entre le premier axe de pivotement (44) est commandé par la seconde section (31) formée entre le premier axe de pivotement (43) et le second axe de pivotement (44) sur le levier qui s'engage contre le réservoir collecteur (14, 16).

7. Machine pour la préparation de boissons selon la revendication 6, caractérisée en ce que la seconde section prend la forme d'une butée placée sur la face inférieure du levier (25) tournée vers le réservoir collecteur (14, 16).

8. Machine pour la préparation de boissons selon l'une des revendications 1 à 7, caractérisée en ce que l'élément élastique (27) prend appui sur le porte-filtre (18) et sur le levier (25).

9. Machine pour la préparation de boissons selon la revendication 8, caractérisée en ce que l'élément élastique (27) est formé par un ressort de compression qui, vu dans la direction longitudinale du levier (25) du second vers le premier axe de pivotement (44, 43), se situe derrière le premier axe de pivotement (43) sur le levier (25).

10. Machine pour la préparation de boissons selon l'une des revendications précédentes, caractérisée en ce que le siège de vanne (51) formé par la vanne pare-gouttes (20) et l'ouverture d'évacuation (19) est disposé à l'intérieur du porte-filtre (18) et en ce qu'une tige de vanne (22) reliant la vanne pare-gouttes (20) traverse l'ouverture d'évacuation (19) vers l'extérieur pour rejoindre le levier (25).

11. Machine pour la préparation de boissons selon la revendication 1, caractérisée en ce que le premier axe de pivotement (43) est orienté dans la direction longitudinale du levier (25), en ce que la vanne pare-gouttes (20) et le point d'articulation (28) sont montés pivotants et en ce que le second axe de pivotement (44) passe par le point de contact (57) de la première section (32) et de la butée solidaire du boîtier (33) et par le centre (50) du point d'articulation (28).

12. Machine pour la préparation de boissons selon la revendication 1, caractérisée en ce que le premier axe de pivotement (43) est orienté dans la direction longitudinale du levier (25), en ce que la vanne pare-gouttes (20) et le point d'articulation (28) sont montés pivotants et en ce que le second axe de pivotement (44') est formé par le point d'articulation (28) et est orienté de manière essentiellement perpendiculaire à la première section du levier (46).

13. Machine pour la préparation de boissons selon les revendications 11 ou 12, caractérisée en ce que la vanne pare-gouttes (20) est formée par une vanne à bille et le point d'articulation (28) par une articulation à rotule et en ce que, en regardant dans la direction longitudinale du levier (25), le point d'articulation (28) et la vanne pare-gouttes (20) sont disposés l'un derrière l'autre.

14. Machine pour la préparation de boissons selon la revendication 12, caractérisée en ce que le levier (25) est guidé par une glissière (40) dans la direction d'ouverture et de fermeture (54) de la vanne pare-gouttes (20).

15. Machine pour la préparation de boissons selon la revendication 14, caractérisée en ce que la glissière (40) se compose de deux parois opposées, disposées sur le porte-filtre (18) et orientées dans la direction d'ouverture et de fermeture (54) de la vanne pare-gouttes (20), entre lesquelles une partie du levier (25) glisse avec un faible jeu.

16. Machine pour la préparation de boissons selon la revendication 15, caractérisée en ce que les parois (55, 56) sont formées en saillie sur le porte-filtre (18).

17. Machine pour la préparation de boissons selon l'une des revendications 1 ou 11 à 16, caractérisée en ce que l'élément élastique (27) agit sur le levier (25) de manière à ce que la rotation du levier (25) provoque un rapprochement automatique de la seconde section (31) par rapport au porte-filtre (18).

18. Machine pour la préparation de boissons selon la revendication 17, caractérisée en ce que l'élément élastique (27) est un ressort de compression et en ce que sa force agit dans la direction d'ouverture (54) de la vanne pare-gouttes (20) sur la première section (32) du levier (25).

19. Machine pour la préparation de boissons selon la revendication 17, caractérisée en ce que l'élément élastique (27) est un ressort de traction et agit à partir du porte-filtre (18) sur la seconde section (31).

# FIG.1

FIG.2

FIG.3

FIG.4

# FIG.5

# FIG.6

# FIG.7